# EUROPEAN PATENT SPECIFICATION

(11) **EP 3 485 146 B1**
(45) Date of publication and mention of the grant of the patent: **28.12.2022**
(21) Application number: 17837915.2
(22) Date of filing: 30.06.2017
(51) Int. Cl.: F01D 5/14, F01D 9/04, F02K 3/075, F02C 9/20

(54) **TURBOFAN ENGINE AND CORRESPONDING METHOD OF OPERATING**
TURBOFAN-TRIEBWERK UND ZUGEHÖRIGES BETRIEBSVERFAHREN
MOTEUR TURBOFAN ET PROCÉDÉ D'EXPLOITATION ASSOCIÉ

(30) Priority: 15.07.2016 US 201615211787
(43) Date of publication of application: 22.05.2019
(73) Proprietor: General Electric Company, Schenectady, NY 12345 (US)
(72) Inventor: DIPIETRO, Anthony, Louis, Cincinnati, OH 45215 (US); BREEZE-STRINGFELLOW, Andrew, Cincinnati, OH 45215 (US); DONALDSON, Richard, Mark, Cincinnati, OH 45215 (US)
(74) Representative: Openshaw & Co.
(86) International application number: PCT/US2017/040469
(87) International publication number: WO 2018/084902

(56) References cited:
- EP-A1- 1 916 385
- EP-A1- 3 040 511
- EP-A1- 3 040 512
- EP-A2- 2 239 420
- EP-A2- 2 378 072
- EP-A2- 2 644 830
- WO-A1-2008/060195
- WO-A1-2015/092306
- GB-A- 1 514 096
- GB-A- 2 405 184
- JP-A- H08 189 419
- US-A1- 2009 317 237

## Description

### BACKGROUND OF THE INVENTION

This invention relates a turbofan engine and a method of operating a variable-cycle gas turbine engine.

A gas turbine engine includes, in serial flow communication, a compressor, a combustor, and turbine. The turbine is mechanically coupled to the compressor and the three components define a turbomachinery core. The core is operable in a known manner to generate a flow of hot, pressurized combustion gases to operate the engine as well as perform useful work such as providing propulsive thrust or mechanical work. A turbofan engine includes, in addition to the core, a low-pressure turbine coupled to a fan configured to produce a bypass stream.

It is desirable to improve turbofan engine performance over wider operating ranges than is presently possible. One way this can be achieved is by using an auxiliary convertible fan stage to enable variations in fan bypass and pressure ratio levels. However, this apparatus is relatively complex and heavy and requires additional moving parts in the fan module.

An alternate form of inducing similar variations in fan bypass and pressure ratio levels is to "overflow" the fan forcing a reduction in fan operating line and pressure ratio level. A side effect of an overflow condition is a fan efficiency decrease. This side effect can be mitigated by incorporating low solidity levels in the rear stage rotor and stator, providing aerodynamic choking relief.

One problem with a fan having low solidity is that the rotor hub and stator endwalls are susceptible to flow separation.

EP 2 239 420 A2 discloses an outlet guide vane assembly for a turbofan engine with combined acoustically absorbing and heat exchanging device, corresponding manufacturing method and turbofan engine. GB 1 514 096 A discloses an axial flow rotor or stator assembly. EP 1 916 385 A1 discloses a sponson of a fan platform. EP 2 378 072 A2 discloses a bypass flow channel comprising a guide wheel and a guide wheel scoop to untwist a fan generated air flow, where a cladding element is provided for installing secondary flow channel such as cables, brackets, supports or drive transmission medium. WO 2008/060195 A1 discloses a vane assembly configured for turning a flow in a gas turbine engine, a stator component comprising the vane assembly, a gas turbine and an aircraft jet engine. GB 2 405 184 A discloses a gas turbine engine lift fan with tandem inlet guide vanes. WO 2015/092306 A1 discloses a turbomachine component or collection of components and associated turbomachine. JP H08 189 419 A discloses a jet propulsion engine or an output part structure which are formed in such constitution that a gas flow part is provided on a central part side and an air flow part is provided on the outer side thereof. US 2009/317237 A1 discloses a system and method for reduction of unsteady pressures in turbomachinery. EP 2 644 830 A2 relates to noise reduction in a turbomachine, and a related method thereof.

### BRIEF DESCRIPTION OF THE INVENTION

This problem is addressed by a turbofan engine incorporating splitter airfoils into the fan and by a method of operating a variable-cycle gas turbine engine.

The invention is set out in the appended set of claims.

### BRIEF DESCRIPTION OF THE DRAWINGS

The invention may be best understood by reference to the following description taken in conjunction with the accompanying drawing figures in which:
FIG. 1 is a schematic, half-sectional view of a gas turbine engine that incorporates a fan apparatus as described herein;
FIG. 2 is a schematic fan map;
FIG. 3 is a perspective view of a portion of a fan rotor suitable for use with the gas turbine engine of FIG. 1;
FIG. 4 is a top plan view of a portion of the fan rotor of FIG. 3;
FIG. 5 is an aft elevation view of the fan rotor of FIG. 3;
FIG. 6 is a side view taken along lines 6-6 of FIG. 4;
FIG. 7 is a side view taken along lines 7-7 of FIG. 4:
FIG. 8 is a perspective view of a portion of a fan stator suitable for use with the gas turbine engine of FIG. 1;
FIG. 9 is a perspective view of a portion of the stator of FIG. 8;
FIG. 10 is a side view of a stator vane shown in FIG. 8; and
FIG. 11 is a side view of a splitter vane shown in FIG. 8.

### DETAILED DESCRIPTION OF THE INVENTION

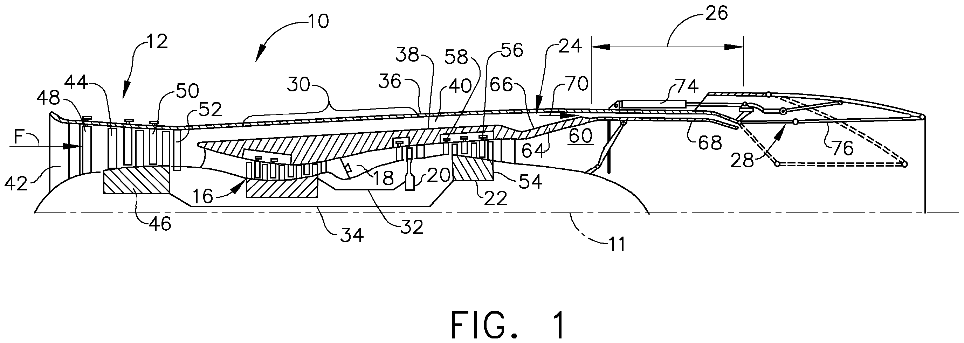

Referring to the drawings wherein identical reference numerals denote the same elements throughout the various views, FIG. 1 illustrates an exemplary mixed-flow gas turbine engine, generally designated 10. The engine 10 has a longitudinal centerline axis 11 and includes, in axial flow sequence, a fan 12, a high-pressure compressor ("HPC") 16, a combustor 18, a high-pressure turbine ("HPT") 20, a low-pressure turbine ("LPT") 22, a variable-area bypass injector ("VABI") 24, an augmentor 26, and an exhaust nozzle 28. Collectively, the HPC 16, combustor 18, and HPT 20 define a core 30 of the engine 10. The HPT 20 and the HPC 16 are interconnected by an outer shaft 32. Collectively, the fan 12 and the LPT 22 define a low-pressure system of the engine 10. The fan 12 and LPT 22 are interconnected by an inner shaft 34.

An outer casing 36 is spaced apart from the core 30 by an inner annular wall 38 so as to define an annular bypass duct 40 therebetween. The outer casing 36 defines an inlet 42 at its upstream end.

The fan 12 may include a number of rotor stages, each of which comprises a row of fan blades 44 mounted to a rotor 46. The fan 12 also includes at least one stator stage comprising a row of stationary airfoils that serve to turn the airflow passing therethrough. In the illustrated example the fan 12 includes inlet guide vanes 48 upstream of the rotor 46, stator vanes 50 disposed between rotor stages, and outlet guide vanes 52 downstream of the rotor 46. For purposes of the present application, any of the inlet guide vanes 48, the stator vanes 50, and the outlet guide vanes 52 may be considered to be "stator airfoils". The fan 12 is configured for axial fluid flow, that is, fluid flow generally parallel to the centerline axis 11. This is in contrast to a centrifugal compressor or mixed-flow compressor.

It is noted that, as used herein, the terms "axial" and "longitudinal" both refer to a direction parallel to the centerline axis 11, while "radial" refers to a direction perpendicular to the axial direction, and "tangential" or "circumferential" refers to a direction mutually perpendicular to the axial and radial directions. As used herein, the terms "forward" or "front" refer to a location relatively upstream in an air flow passing through or around a component, and the terms "aft" or "rear" refer to a location relatively downstream in an air flow passing through or around a component. The direction of this flow is shown by the arrow "F" in FIG. 1. These directional terms are used merely for convenience in description and do not require a particular orientation of the structures described thereby.

While the illustrated example is a low-bypass turbofan engine with a multistage fan, it will be understood that the principles of the present invention are equally applicable to single-stage fans as well as other types of engines having fans, such as high-bypass turbofans.

As used herein, the term "fan" refers to any apparatus in a turbine engine having a rotor with airfoils operable to produce a fluid flow, where at least a part of the fluid flow discharged from the rotor does not pass through any turbine. Stated another way, at least a part of the fluid flow is only used for thrust and not mechanical energy extraction.

The LPT 22 includes a rotor 54 and variable pitch stators 56. For the purpose of providing additional control of the core engine flow, a variable area nozzle 58 may be provided upstream of the low pressure turbine rotor 22. The cross-sectional flow area to the low pressure turbine rotor 54 may be varied by varying the pitch of the variable area nozzle 58 and the variable pitch stators 56 which vary the back pressure on the high pressure turbine rotor and thereby assist in adjusting the high pressure turbine rotor speed.

Downstream of the core 30, the VABI 24 or other variable mixing device is provided to mix the bypass duct flow with the combustion gases discharged from the LPT 22 in the region designated generally at 60 which also forms the inlet to an augmentor 26.

In the illustrated example, the VABI 24 includes a plurality of rotatable vanes 64 which span a passage 66 in the inner wall 38 separating the bypass duct 40 and the core 30 at a point downstream of the LPT 22. The vanes 64 may be operated by a suitable actuator (not shown). Rotation of the vanes 64 to a near vertical position as seen in FIG. 1 increases the area through which the bypass stream is injected into the mixing region 60 while rotating one or more of the vanes 64 to a near horizontal position decreases the area through which the bypass stream is injected into the region 60.

The augmentor 26 is circumscribed by a liner 68 which is spaced apart from the engine outer casing 36 so as to form a passage 70 therebetween. The passage 70 has its inlet disposed approximately coplanar to the inlet of the augmentor 26 such that a portion of the bypass stream is directed into the passage 70 to provide cooling air for the augmentor 26. The outlet of the passage 70 terminates intermediate the augmentor 26 and the variable area converging-diverging exhaust nozzle 28 secured to the aft end of the hour casing 36. The augmentor 26 may be of any type well known in the art. In order to assist in modulating the flow in the bypass duct and core 30, the area of the exhaust nozzle 28 may be varied by suitable variable geometry means such as the illustrated linear actuator 74 controlling a hinged flap assembly 76 to vary the cross-sectional area of the exhaust nozzle 28.

In operation, pressurized air from the HPC 16 is mixed with fuel in the combustor 18 and burned, generating combustion gases. Some work is extracted from these gases by the HPT 20 which drives the compressor 16 via the outer shaft 32. The remainder of the combustion gases are discharged from the core 30 into the LPT 22. The LPT 22 extracts work from the combustion gases and drives the fan 12 through the inner shaft 34. The fan 12 receives inlet airflow from the inlet 42, and thereupon pressurizes the airflow, a portion of which ("core flow") is delivered to the core 30 and the remainder of which ("bypass flow") is directed to the bypass duct 40.

The core flow and the bypass flow rejoin in the mixing region 60 Thrust is obtained by the discharge of the mixed flow through the variable area converging-diverging exhaust nozzle 28. When needed, thrust augmentation is provided by introducing fuel into the mixed flow within the augmentor 26 and igniting it.

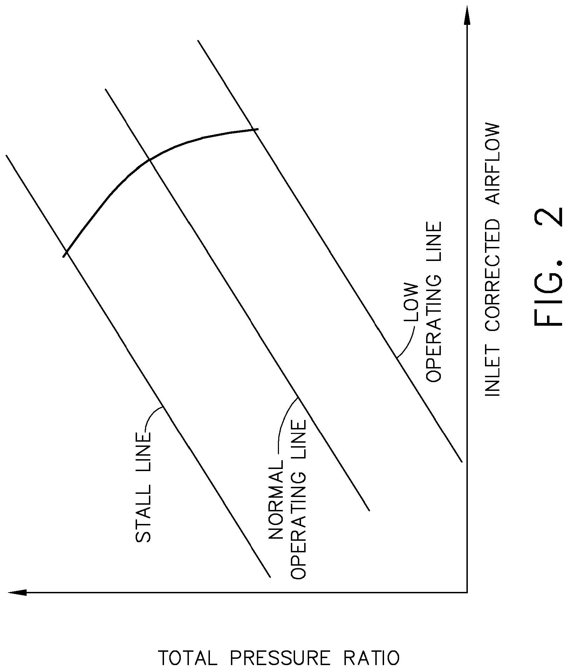

FIG. 2 is a simplified fan map which illustrates the operating characteristics of the fan 12. The fan map shows total pressure ratio plotted against inlet airflow (corrected to sea level standard day conditions). A stall line is determined empirically, for example by rig testing, and represents the limit of stable operation of the fan 12.

A normal or nominal operating line represents a locus of operating points on the fan map during normal operation of the engine 10, with no variable-cycle aspects. The operating point of the fan 12 along the operating nominal operating line is determined by fuel flowrate, which is a controllable parameter.

To accommodate various operating requirements, it is possible to change the operating characteristics of the fan 12 and therefore move the operating line from the nominal position on the compressor map.

It will be understood that operation of the VABI 24, the exhaust nozzle 28, and/or other variable-cycle devices have the effect of changing the fan map. For example, during high thrust operation, an open condition of the exhaust nozzle 72 and/or an open position of the VABI 24 drives the fan 12 into a flow exceeding the design condition ("overflow") reducing fan pressure ratio and a lowering the operating line. This is illustrated in FIG. 2 as a second operating line ("low operating line") is shown positioned lower than the nominal operating line.

The VABI 24 and/or nozzle 28 described above are only two examples of "variable-cycle" devices. Any device which is operable to change the back pressure sensed by the fan 12 would have the effect of moving the nominal operating line of the fan map and would therefore be considered a "variable-cycle device". In the example shown in FIG. 2, the fan 12 would operate along the second operating line when the variable-cycle device is active.

It will be understood that some deviation from the nominal operating line is to be expected in some circumstances even without deliberate action. However, as used herein, the term " variable-cycle" implies movement of the operating line from the nominal position deliberately and by a significant amount. For example, using the variable-cycle device, the operating line may be moved (e.g. lowered) from its nominal location by about 5% or more of its nominal distance from the stall line.

Non-limiting examples of variable-cycle devices include: a variable-area bypass injector, a variable-area exhaust, a variable high pressure compressor inter-stage bleed system, a fan having a variable pressure ratio, a fan having the capability of bypassing stages, and a variable area turbine. Multiple engine architectures and configurations can be utilized to achieve variable-cycle capability.

A side effect of lowering the operating line of the fan 12 is to move it towards choke, resulting in a large efficiency penalty. This efficiency penalty can be abated by modification of the fan rotor and/or stator to incorporate "splitters", examples of which are described below.

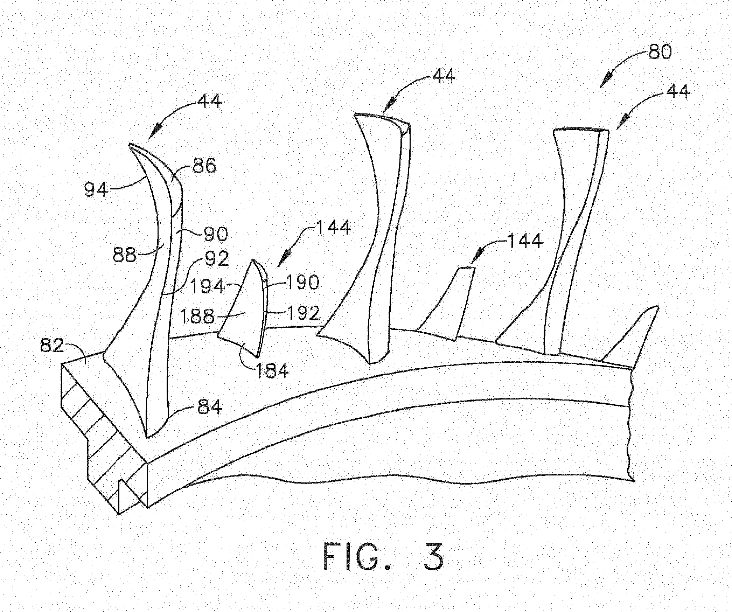

FIGS. 3-7 illustrate a portion of an exemplary rotor stage 80 that is suitable for incorporation in the fan 12. As an example, the rotor stage 80 may be incorporated into one or more of the stages in the aft half of the and fan 12, particularly the last or aft-most stages.

The rotor 46 described above defines an annular flowpath surface 82, a small section of which is shown in FIG. 3. In this example, the flowpath surface 82 is depicted as a body of revolution (i.e. axisymmetric). Optionally, the flowpath surface 82 may have a non-axisymmetric surface profile (not shown).

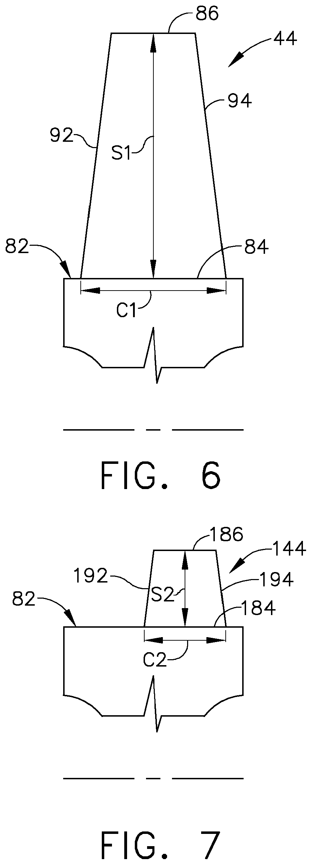

The fan blades 44 described above extend from the flowpath surface 82. Each fan blade 44 extends from a root 84 at the flowpath surface 82 to a tip 86 and includes a concave pressure side 88 joined to a convex suction side 90 at a leading edge 92 and a trailing edge 94. As best seen in FIG. 6, each fan blade 44 has a span (or span dimension) "S1" defined as the radial distance from the root 84 to the tip 86, and a chord (or chord dimension) "C1" defined as the length of an imaginary straight line connecting the leading edge 92 and the trailing edge 94. Depending on the specific design of the fan blade 44, its chord C1 may be different at different locations along the span S1. For purposes of the present invention, the relevant measurement is the chord C1 at the root 84.

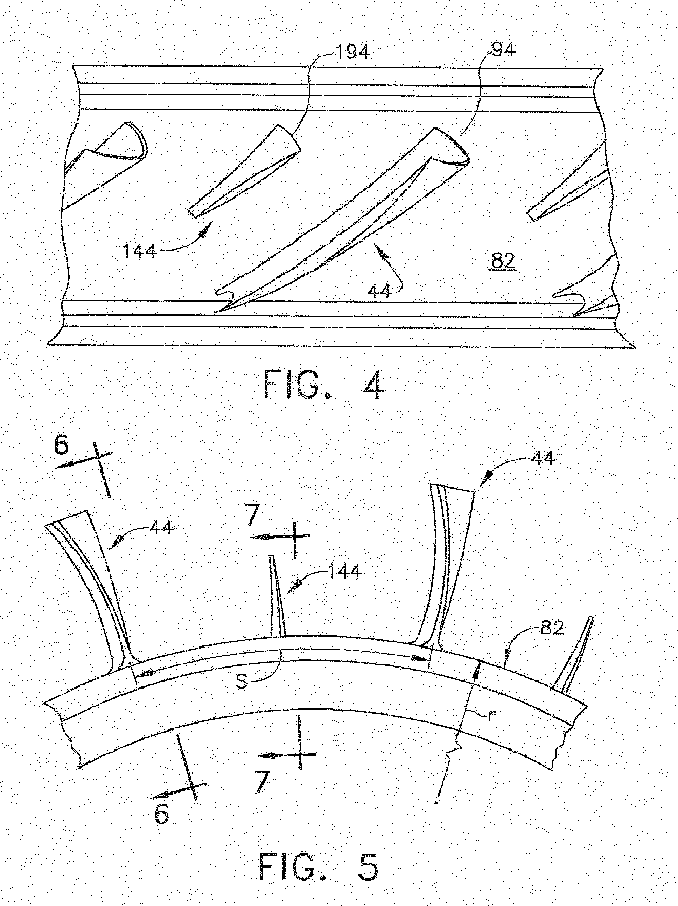

The fan blades 44 are uniformly spaced apart around the periphery of the flowpath surface 82. A mean circumferential spacing "s" (see FIG. 5) between adjacent fan blades 44 is defined as s=2πr/Z, where "r" is a designated radius of the fan blades 44 (for example at the root 84) and "Z" is the number of fan blades 44. A non-dimensional parameter called "solidity" is defined as c/s, where "c" is equal to the blade chord as described above. In the illustrated example, the fan blades 44 may have a spacing which is significantly greater than a spacing that would be expected in the prior art, resulting in a blade solidity significantly less than would be expected in the prior art.

This reduced solidity can minimize the efficiency loss resulting from "overflowing" the fan 12 in the manner described above. The reduced blade solidity can also have the effect of reducing weight and simplifying manufacturing by minimizing the total number of fan airfoils used in a given rotor stage.

An aerodynamically adverse side effect of reduced blade solidity is to increase the rotor passage flow area between adjacent fan blades 44. This increase in rotor passage through flow area increases the aerodynamic loading level and in turn tends to cause undesirable flow separation on the suction side 90 of the fan blade 44, at the inboard portion near the root 84, also referred to as "hub flow separation".

To reduce or prevent hub flow separation, the rotor stage 80 may be provided with splitters, or "splittered". In the illustrated example, an array of splitter blades 144 extend from the flowpath surface 82. One splitter blade 144 is disposed between each pair of fan blades 44. In the circumferential direction, the splitter blades 144 may be located halfway or circumferentially biased between two adjacent fan blades 44. Stated another way, the fan blades 44 and splitter blades 144 alternate around the periphery of the flowpath surface 82. Each splitter blade 144 extends from a root 184 at the flowpath surface 82 to a tip 186, and includes a concave pressure side 188 joined to a convex suction side 190 at a leading edge 192 and a trailing edge 194. As best seen in FIG. 7, each splitter blade 144 has a span (or span dimension) "S2" defined as the radial distance from the root 184 to the tip 186, and a chord (or chord dimension) "C2" defined as the length of an imaginary straight line connecting the leading edge 192 and the trailing edge 194. Depending on the specific design of the splitter blade 144, its chord C2 may be different at different locations along the span S2. For purposes of the present invention, the relevant measurement is the chord C2 at the root 184.

The splitter blades 144 function to locally increase the hub solidity of the rotor stage 80 and thereby prevent the above-mentioned flow separation from the fan blades 44. A similar effect could be obtained by simply increasing the number of fan blades 44, and therefore reducing the blade-to-blade spacing. This, however, has the undesirable side effect of increasing aerodynamic surface area frictional losses which would manifest as reduced aerodynamic efficiency and increased rotor weight. Therefore, the dimensions of the splitter blades 144 and their position may be selected to prevent flow separation while minimizing their surface area. The splitter blades 144 are positioned so that their trailing edges 194 are at approximately the same axial position as the trailing edges 184 of the fan blades 44, relative to the rotor 46. this can be seen in FIG. 4. The span S2 and/or the chord C2 of the splitter blades 144 may be some fraction less than unity of the corresponding span S1 and chord C1 of the fan blades 44. These may be referred to as "part-span" and/or "part-chord" splitter blades. For example, the span S2 may be equal to or less than the span S1. Preferably for reducing frictional losses, the span S2 is 50% or less of the span S1. More preferably for the least frictional losses, the span S2 is 30% or less of the span S1. As another example, the chord C2 may be equal to or less than the chord C1. Preferably for the least frictional losses, the chord C2 is 80% or less of the chord C1.

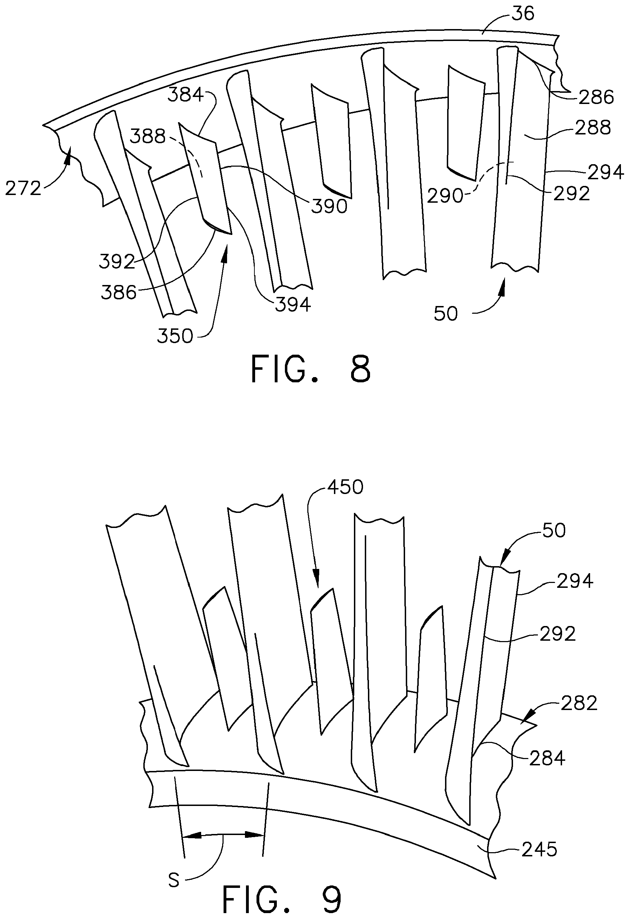

FIGS. 8-11 illustrate a portion of an exemplary stator structure that is suitable for inclusion in the fan 12. As an example, the stator structure may be incorporated into one or more of the stages in the aft half of the fan 12, particularly the last or aft-most stages. As noted above, the stator structure includes several rows of airflow-shaped fan stator vanes 50. These are bounded by an inner band 245 and the outer casing 36, respectively.

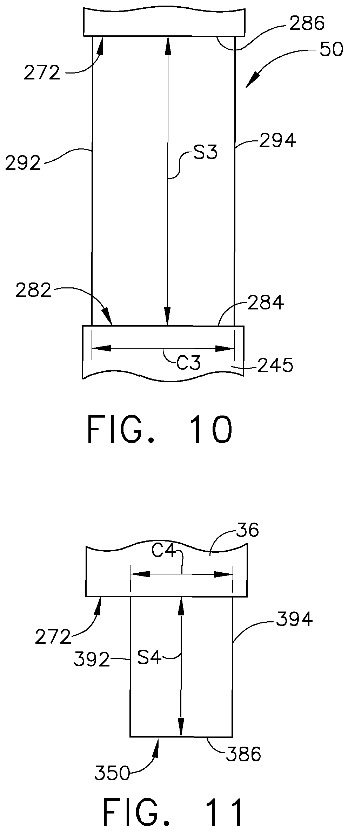

The inner band 245 defines an annular inner flowpath surface 282, and the outer casing 36 defines an annular outer flowpath surface 272. The stator vanes 50 extend between the inner and outer flowpath surfaces 282, 272. Each stator vane 50 extends from a root 284 at the inner flowpath surface 282 to a tip 286 at the outer flowpath surface 272 and includes a concave pressure side 288 joined to a convex suction side 290 at a leading edge 292 and a trailing edge 294. As best seen in FIG. 10, each stator vane 50 has a span (or span dimension) "S3" defined as the radial distance from the root 284 to the tip 286, and a chord (or chord dimension) "C3" defined as the length of an imaginary straight line connecting the leading edge 292 and the trailing edge 294. Depending on the specific design of the stator vane 50, its chord C3 may be different at different locations along the span S3. For purposes of the present invention, the relevant measurement would be the chord C3 at the root 284 or tip 286.

The stator vanes 50 are uniformly spaced apart around the periphery of the inner flowpath surface 282. The stator vanes 50 have a mean circumferential spacing "s", defined as described above (see FIG. 9). A non-dimensional parameter called "solidity" is defined as c/s, where "c" is equal to the vane chord as described above. In the illustrated example, the stator vanes 50 may have a spacing which is significantly greater than a spacing that would be expected in the prior art, resulting in a vane solidity significantly less than would be expected in the prior art.

As seen in FIGS. 8 and 9, the inner and outer flowpath surfaces 282, 272 are depicted as bodies of revolution (i.e. axisymmetric structures). Optionally, either or both of the inner or outer flowpath surfaces 282, 272 may have a non-axisymmetric surface profile (not shown).

In operation, there is a potential for undesirable flow separation on the suction side 290 of the stator vane 50, at the inboard portion near the root 284, also referred to as "hub flow separation". It also tends to cause undesirable flow separation on the suction side 290 of the stator vane 50, at the outboard portion near the tip 286, also referred to as "case flow separation". Generally, both of these conditions may be referred to as "endwall separation".

To counter this adverse side effect, one or both of the inner and outer flowpath surfaces 250, 272 may be provided with an array of splitter vanes. In the example shown in FIG. 8, an array of splitter vanes 350 extend radially inward from the outer flowpath surface 272. One splitter vane 350 is disposed between each pair of stator vanes 50. In the circumferential direction, the splitter vanes 350 may be located halfway or circumferentially biased between two adjacent stator vanes 50. Stated another way, the stator vanes 50 and splitter vanes 350 alternate around the periphery of the outer flowpath surface 272. Each splitter vane 350 extends from a root 384 at the outer flowpath surface 272 to a tip 386, and includes a concave pressure side 388 joined to a convex suction side 390 at a leading edge 392 and a trailing edge 394. As best seen in FIG. 11, each splitter vane 350 has a span (or span dimension) "S4" defined as the radial distance from the root 384 to the tip 386, and a chord (or chord dimension) "C4" defined as the length of an imaginary straight line connecting the leading edge 392 and the trailing edge 394. Depending on the specific design of the splitter vane 350, its chord C4 may be different at different locations along the span S4. For purposes of the present invention, the relevant measurement is the chord C4 at the root 384.

The splitter vanes 350 function to locally increase the hub solidity of the stator and thereby prevent the above-mentioned flow separation from the stator vanes 50. A similar effect could be obtained by simply increasing the number of stator vanes 50, and therefore reducing the vane-to-vane spacing. This, however, has the undesirable side effect of increasing aerodynamic surface area frictional losses which would manifest as reduced aerodynamic efficiency and increased stator weight. Therefore, the dimensions of the splitter vanes 350 and their position may be selected to prevent flow separation while minimizing their surface area. The splitter vanes 350 are positioned so that their trailing edges 394 are at approximately the same axial position as the trailing edges 294 of the stator vanes 50, relative to the outer flowpath surface 272. This can be seen in FIG. 8. The span S4 and/or the chord C4 of the splitter vanes 350 may be some fraction less than unity of the corresponding span S3 and chord C3 of the stator vanes 50. These may be referred to as "part-span" and/or "part-chord" splitter vanes. For example, the span S4 may be equal to or less than the span S4. Preferably for reducing frictional losses, the span S4 is 50% or less of the span S3. More preferably for the least frictional losses, the span S4 is 30% or less of the span S3. As another example, the chord C4 may be equal to or less than the chord C3. Preferably for the least frictional losses, the chord C4 is 80% or less of the chord C3.

FIG. 9 illustrates an array of splitter vanes 450 extending radially outward from the inner flowpath surface 282. One splitter vane 450 is disposed between each pair of stator vanes 450. Other than the fact that they extend from the inner flowpath surface 282, the splitter vanes 450 may be identical to the splitter vanes 350 described above, in terms of their shape, circumferential position relative to the stator vanes 50, and their span and chord dimensions. As noted above, splitter vanes may optionally be incorporated at the inner flowpath surface 282, or the outer flowpath surface 272, or both.

The engine having the fan apparatus described herein with splitter airfoils (splitter blades and/or splitter vanes) has several advantages over the prior art. It increases the endwall solidity level locally, reduces the endwall aerodynamic loading level locally, and suppresses the tendency of the airfoil portion adjacent the endwall to want to separate.

The use of a splittered fan enables variable fan pressure and bypass ratio cycles that will yield reduced engine fuel burn levels. It improves variable-cycle turbine engine performance and enables more efficient operation over wider power ranges and flight regimes. The concept is un-intrusive to implement.

The foregoing has described a gas turbine engine with a splittered fan.

## Claims

1. A turbofan engine (10), comprising:
a turbomachinery core (30) operable to produce a flow of combustion gases;
a low-pressure turbine (22) configured to extract energy from the flow of combustion gases so as to drive a fan (12) to produce a fan flow, the fan (12) being configured such that at least a portion of the fan flow exits the turbofan engine (10) without passing through a turbine; and
at least one variable-cycle device (24, 28) operable to vary a backpressure downstream of the fan (12); wherein
the fan (12) includes:
a rotor (46) comprising at least one rotor stage including a rotatable disk defining a rotor flowpath surface and an array of axial-flow rotor airfoils (44) extending outward from the rotor flowpath surface; and
at least one stator stage comprising a wall defining a stator flowpath surface, and an array of axial-flow stator airfoils (50) extending away from the stator flowpath surface; and
at least one of the rotor or stator stages includes an array of airfoil-shaped splitter airfoils (144, 350, 450) extending from at least one of the rotor flowpath surface or the stator flowpath surface, wherein splitter airfoils of the array of airfoil-shaped splitter airfoils (144, 350, 450) alternate with rotor airfoils of the array of axial-flow rotor airfoils (44) or stator airfoils of the array of axial-flow stator airfoils (50) of the corresponding stage, wherein at least one of a chord dimension of the splitter airfoils of the array of airfoil-shaped splitter airfoils (144, 350, 450) and a span dimension of the splitter airfoils of the array of airfoil-shaped splitter airfoils (144, 350, 450) is less than the corresponding dimension of the rotor airfoils of the array of axial-flow rotor airfoils (44) and the stator airfoils of the array of axial-flow stator airfoils (50) of the at least one of the rotor or stator stages.

2. The turbofan engine (10) of claim 1 wherein the variable-cycle device (24, 28) is a variable-area exhaust nozzle.

3. The turbofan engine (10) of claim 1 wherein the variable-cycle device (24, 28) is a variable area bypass injector.

4. The turbofan engine (10) of claim 1 wherein at least one of the flowpath surfaces is not a body of revolution.

5. The turbofan engine (10) of claim 1 wherein each splitter airfoil of the array of airfoil-shaped splitter airfoils (144, 350, 450) is located approximately midway between two adjacent rotor or stator airfoils (44, 50).

6. The turbofan engine (10) of claim 1 wherein the splitter airfoils of the array of airfoil-shaped splitter airfoils (144, 350, 450) are positioned such that trailing edges of the splitter airfoils of the array of airfoil-shaped splitter airfoils (144, 350, 450) are at approximately a same axial position as trailing edges of the rotor or stator airfoils (44, 50), relative to the corresponding flowpath surface.

7. The turbofan engine (10) of claim 1 wherein the span dimension of the splitter airfoils (144, 350, 450) is 50% or less of the span dimension of the corresponding rotor or stator airfoils (44, 50).

8. The turbofan engine (10) of claim 1 wherein the span dimension of the splitter airfoils (144, 350, 450) is 30% or less of the span dimension of the corresponding rotor or stator airfoils (44, 50).

9. The turbofan engine (10) of claim 5 wherein the chord dimension of the splitter airfoils (144, 350, 450) at roots thereof is 80% or less of the chord dimension of the corresponding rotor or stator airfoils (44, 50) at roots thereof.

10. The turbofan engine (10) of claim 1 wherein the chord dimension of the splitter airfoils (144, 350, 450) at roots thereof is 80% or less of the chord dimension of the corresponding rotor or stator airfoils (44, 50) at roots thereof.

11. The turbofan engine (10) of claim 1 wherein the fan (12) includes multiple stator and rotor stages, and the splitter airfoils (144, 350, 450) are incorporated into one or more of the multiple stator and rotor stages located in an aft half of the fan (12).

12. The turbofan engine (10) of claim 1 wherein the at least one of the rotor or stator stages is an aft-most rotor or stator stage of the fan (12).

13. A method of operating a variable-cycle gas turbine engine (10), comprising:
using a turbomachinery core (30) including in sequential flow relationship: a compressor, a combustor, and a turbine mechanically coupled to the compressor to generate a flow of combustion gases;
using a low-pressure turbine (22) to extract energy from the flow of combustion gases so as to drive a fan (12) to produce a fan flow, the fan (12) being configured such that at least a portion of the fan flow exits the variable-cycle gas turbine engine (10) without passing through a turbine, wherein the fan (12) incorporates at least one row of splitter airfoils (144, 350, 450); and
during operation of the variable-cycle gas turbine engine (10), using at least one variable-cycle device (24, 28) to vary a backpressure downstream of the fan (12), thereby moving an operating line of the fan (12) by at least 5% from a nominal position.

14. The method of claim 13 wherein the variable-cycle device (24, 28) is used to lower the fan operating line relative to the nominal position.

## Patentansprüche

1. Mantelstromtriebwerk (10), umfassend:
einen Turbomaschinenkern (30), der betriebsfähig ist, um einen Strom von Verbrennungsgasen zu erzeugen;
eine Niederdruckturbine (22), die konfiguriert ist, um Energie aus dem Strom von Verbrennungsgasen zu extrahieren, um einen Fan (12) anzutreiben, um einen Fanstrom zu erzeugen, wobei der Fan (12) derart konfiguriert ist, dass zumindest ein Abschnitt des Fanstroms das Mantelstromtriebwerk (10) verlässt, ohne eine Turbine zu durchlaufen; und
mindestens eine Vorrichtung mit variablem Zyklus (24, 28), die betriebsfähig ist, um einen Gegendruck stromabwärts des Fans (12) zu ändern; wobei
der Fan (12) einschließt:
einen Rotor (46), umfassend mindestens eine Rotorstufe, die eine drehbare Scheibe einschließt, die eine Rotorstrombahnoberfläche definiert, und eine Anordnung von Axialstromrotorprofilen (44), die sich von der Rotorstrombahnoberfläche nach außen erstrecken; und
mindestens eine Statorstufe, umfassend eine Wand, die eine Statorstrombahnoberfläche definiert, und eine Anordnung von Axialstromstatorprofilen (50), die sich von der Statorstrombahnoberfläche weg erstrecken; und
mindestens eine der Rotor- oder Statorstufen eine Anordnung von profilförmigen Teilerprofilen (144, 350, 450) einschließt, die sich von mindestens einer der Rotorstrombahnoberfläche oder der Statorstrombahnoberfläche erstrecken, wobei sich Teilerprofile der Anordnung von profilförmigen Teilerprofilen (144, 350, 450) mit Rotorprofilen der Anordnung von Axialstromrotorprofilen (44) oder Statorprofilen der Anordnung von Axialstromstatorprofilen (50) der entsprechenden Stufe abwechseln, wobei mindestens eine von einer Sehnenabmessung der Teilerprofile der Anordnung von profilförmigen Teilerprofilen (144, 350, 450) und einer Spannweitenabmessung der Teilerprofile der Anordnung von profilförmigen Teilerprofilen (144, 350, 450) kleiner als die entsprechende Abmessung der Rotorprofilen der Anordnung von Axialstromrotorprofilen (44) und der Statorprofilen der Anordnung von Axialstromstatorprofilen (50) der mindestens einen von den Rotor- oder Statorstufen ist.

2. Mantelstromtriebwerk (10) nach Anspruch 1, wobei die Vorrichtung mit variablem Zyklus (24, 28) eine Schubdüse mit variabler Fläche ist.

3. Mantelstromtriebwerk (10) nach Anspruch 1, wobei die Vorrichtung mit variablem Zyklus (24, 28) ein Bypassinjektor mit variabler Fläche ist.

4. Mantelstromtriebwerk (10) nach Anspruch 1, wobei mindestens eine der Strombahnoberflächen kein Rotationskörper ist.

5. Mantelstromtriebwerk (10) nach Anspruch 1, wobei jedes Teilerprofil der Anordnung von profilförmigen Teilerprofilen (144, 350, 450) etwa in der Mitte zwischen zwei angrenzenden Rotor- oder Statorprofilen (44, 50) gelegen ist.

6. Mantelstromtriebwerk (10) nach Anspruch 1, wobei die Teilerprofile der Anordnung von profilförmigen Teilerprofilen (144, 350, 450) derart positioniert sind, dass Hinterkanten der Teilerprofile der Anordnung von profilförmigen Teilerprofilen (144, 350, 450) in etwa derselben axialen Position wie Hinterkanten der Rotor- oder Statorprofile (44, 50), relativ zu der entsprechenden Strombahnoberfläche, liegen.

7. Mantelstromtriebwerk (10) nach Anspruch 1, wobei die Spannweitenabmessung der Teilerprofile (144, 350, 450) 50 % oder weniger der Spannweitenabmessung der entsprechenden Rotor- oder Statorprofile (44, 50) beträgt.

8. Mantelstromtriebwerk (10) nach Anspruch 1, wobei die Spannweitenabmessung der Teilerprofile (144, 350, 450) 30 % oder weniger der Spannweitenabmessung der entsprechenden Rotor- oder Statorprofile (44, 50) beträgt.

9. Mantelstromtriebwerk (10) nach Anspruch 5, wobei die Sehnenabmessung der Teilerprofile (144, 350, 450) an Wurzeln davon 80 % oder weniger der Sehnenabmessung der entsprechenden Rotor- oder Statorprofile (44, 50) an Wurzeln davon beträgt.

10. Mantelstromtriebwerk (10) nach Anspruch 1, wobei die Sehnenabmessung der Teilerprofile (144, 350, 450) an Wurzeln davon 80 % oder weniger der Sehnenabmessung der entsprechenden Rotor- oder Statorprofile (44, 50) an Wurzeln davon beträgt.

11. Mantelstromtriebwerk (10) nach Anspruch 1, wobei der Fan (12) mehrere Stator- und Rotorstufen einschließt und die Teilerprofile (144, 350, 450) in einen oder mehrere der mehreren Stator- und Rotorstufen integriert sind, die in einer hinteren Hälfte des Fans (12) gelegen sind.

12. Mantelstromtriebwerk (10) nach Anspruch 1, wobei die mindestens eine von den Rotor- oder Statorstufen eine hinterste Rotor- oder Statorstufe des Fans (12) ist.

13. Verfahren zum Betreiben eines Gasturbinentriebwerks mit variablem Zyklus (10), umfassend:
Verwenden eines Turbomaschinenkerns (30), einschließlich in einer sequenziellen Strombeziehung: eines Kompressors, einer Brennkammer, und einer Turbine, die mit dem Kompressor mechanisch gekoppelt ist, um einen Strom von Verbrennungsgasen zu generieren;
Verwenden einer Niederdruckturbine (22), um Energie aus dem Strom von Verbrennungsgasen zu extrahieren, um einen Fan (12) anzutreiben, um einen Fanstrom zu erzeugen, wobei der Fan (12) derart konfiguriert ist, dass zumindest ein Abschnitt des Fanstroms das Gasturbinentriebwerk mit variablem Zyklus (10) verlässt, ohne eine Turbine zu durchlaufen, wobei der Fan (12) mindestens eine Reihe von Teilerprofilen (144, 350, 450) integriert; und
während des Betriebs des Gasturbinentriebwerks mit variablem Zyklus (10), Verwenden mindestens einer Vorrichtung mit variablem Zyklus (24, 28), um einen Gegendruck stromabwärts des Fans (12) zu ändern, wobei dadurch eine Betriebsleitung des Fans (12) um mindestens 5 % von einer Sollposition bewegt wird.

14. Verfahren nach Anspruch 13, wobei die Vorrichtung mit variablem Zyklus (24, 28) verwendet wird, um die Fanbetriebsleitung relativ zu der Sollposition zu senken.

## Revendications

1. Turboréacteur à double flux (10) comprenant :
un noyau de turbomachine (30) pouvant fonctionner pour produire un flux de gaz de combustion ;
une turbine basse pression (22) conçue pour extraire de l'énergie provenant du flux de gaz de combustion de manière à entraîner une soufflante (12) afin de produire un flux de soufflante, la soufflante (12) étant conçue de telle sorte qu'au moins une partie du flux de soufflante sort du turboréacteur à double flux (10) sans passer à travers une turbine ; et
au moins un dispositif à cycle variable (24, 28) pouvant fonctionner pour faire varier une contre-pression en aval de la soufflante (12) ; dans lequel
la soufflante (12) inclut :
un rotor (46) comprenant au moins un étage de rotor incluant un disque rotatif définissant une surface de trajet de flux de rotor et un réseau de profils aérodynamiques de rotor à flux axial (44) s'étendant vers l'extérieur à partir de la surface de trajet de flux de rotor ; et
au moins un étage de stator comprenant une paroi définissant une surface de trajet de flux de stator, et un réseau de profils aérodynamiques de stator à flux axial (50) s'étendant à l'écart de la surface de trajet de flux de stator ; et
au moins l'un parmi les étages de rotor ou de stator inclut un réseau de profils aérodynamiques de séparateur en forme de profil aérodynamique (144, 350, 450) s'étendant à partir d'au moins l'une de la surface de trajet de flux de rotor ou de la surface de trajet de flux de stator, dans lequel des profils aérodynamiques de séparateur du réseau de profils aérodynamiques de séparateur en forme de profil aérodynamique (144, 350, 450) alternent avec des profils aérodynamiques de rotor du réseau de profils aérodynamiques de rotor à flux axial (44) ou de profils aérodynamiques de stator du réseau de profils aérodynamiques de stator à flux axial (50) de l'étage correspondant, dans lequel au moins l'une parmi une dimension de corde des profils aérodynamiques de séparateur du réseau de profils aérodynamiques de séparateur en forme de profil aérodynamique (144, 350, 450) et une dimension d'envergure des profils aérodynamiques du réseau de séparateur en forme de profil aérodynamique (144, 350, 450) est inférieure à la dimension correspondante des profils aérodynamiques de rotor du réseau de profils aérodynamiques de rotor à flux axial (44) et des profils aérodynamiques de stator du réseau de profils de stator à flux axial (50) de l'au moins un des étages de rotor.

2. Turboréacteur à double flux (10) selon la revendication 1, dans lequel le dispositif à cycle variable (24, 28) est une tuyère d'échappement à surface variable.

3. Turboréacteur à double flux (10) selon la revendication 1, dans lequel le dispositif à cycle variable (24, 28) est un injecteur de dérivation à zone variable.

4. Turboréacteur à double flux (10) selon la revendication 1, dans lequel au moins une des surfaces de trajet de flux n'est pas un corps de révolution.

5. Turboréacteur à double flux (10) selon la revendication 1, dans lequel chaque profil aérodynamique de séparateur du réseau de profils aérodynamiques de séparateur en forme de profil aérodynamique (144, 350, 450) est situé approximativement à mi-chemin entre deux profils adjacents de rotor ou de stator (44, 50).

6. Turboréacteur à double flux (10) selon la revendication 1, dans lequel les profils aérodynamiques de séparateur du réseau de profils aérodynamiques de séparateur en forme de profil aérodynamique (144, 350, 450) sont positionnés de telle sorte que les bords de fuite des profils aérodynamiques de séparateur du réseau de profils aérodynamiques de séparateur en forme de profil aérodynamique (144, 350, 450) soient approximativement dans une même position axiale que des bords de fuite des profils aérodynamiques de rotor ou de stator (44, 50), par rapport à la surface de trajet de flux correspondante.

7. Turboréacteur à double flux (10) selon la revendication 1, dans lequel la dimension d'envergure des profils aérodynamiques de séparateur (144, 350, 450) est de 50 % ou moins de la dimension d'envergure des profils aérodynamiques correspondants de rotor ou de stator (44, 50).

8. Turboréacteur à double flux (10) selon la revendication 1, dans lequel la dimension d'envergure des profils aérodynamiques de séparateur (144, 350, 450) est inférieure ou égale à 30 % de la dimension d'envergure des profils aérodynamiques correspondants de rotor ou de stator (44, 50).

9. Turboréacteur à double flux (10) selon la revendication 5, dans lequel la dimension de corde des profils aérodynamiques de séparateur (144, 350, 450) au niveau de racines de celles-ci est de 80 % ou moins de la dimension de corde des profils aérodynamiques correspondants de rotor ou de stator (44, 50) au niveau de racines de celles-ci.

10. Turboréacteur à double flux (10) selon la revendication 1, dans lequel la dimension de corde des profils aérodynamiques de séparateur (144, 350, 450) au niveau de racines de celles-ci est de 80 % ou moins de la dimension de corde des profils aérodynamiques correspondants de rotor ou de stator (44, 50) au niveau de racines de celles-ci.

11. Turboréacteur à double flux (10) selon la revendication 1, dans lequel la soufflante (12) inclut de multiples étages de stator et de rotor, et les profils aérodynamiques de séparateur (144, 350, 450) sont incorporés dans un ou plusieurs des multiples étages de stator et de rotor situés dans une moitié arrière de la soufflante (12).

12. Turboréacteur à double flux (10) selon la revendication 1, dans lequel l'au moins un des étages de rotor ou de stator est un rotor le plus arrière ou un étage de stator de la soufflante (12).

13. Procédé de fonctionnement d'un moteur à turbine à gaz à cycle variable (10), comprenant :
l'utilisation d'un noyau de turbomachine (30) incluant dans la relation de flux séquentielle : un compresseur, une chambre de combustion et une turbine accouplée mécaniquement au compresseur pour générer un flux de gaz de combustion ;
l'utilisation d'une turbine basse pression (22) pour extraire de l'énergie de la circulation de gaz de combustion de manière à entraîner une soufflante (12) afin de produire un flux de soufflante, la soufflante (12) étant conçue de telle sorte qu'au moins une partie du flux de soufflante sort du moteur à turbine à gaz à cycle variable (10) sans passer à travers une turbine, dans lequel la soufflante (12) inclut au moins une rangée de profils aérodynamiques de séparateur (144, 350, 450) ; et
pendant le fonctionnement du moteur à turbine à gaz à cycle variable (10), l'utilisation d'au moins un dispositif à cycle variable (24, 28) pour faire varier une contre-pression en aval de la soufflante (12), déplaçant ainsi une ligne de fonctionnement de la soufflante (12) d'au moins 5 % à partir d'une position nominale.

14. Procédé selon la revendication 13, dans lequel le dispositif à cycle variable (24, 28) est utilisé pour abaisser la ligne de fonctionnement de soufflante par rapport à la position nominale.
